# EUROPÄISCHE PATENTSCHRIFT

(11) **EP 2 521 940 B1**
(45) Veröffentlichungstag und Bekanntmachung des Hinweises auf die Patenterteilung: **02.04.2014**
(21) Anmeldenummer: 11740636.3
(22) Anmeldetag: 01.08.2011
(51) Int. Cl.: G03B 21/20, G02B 27/09, G03B 21/14, F21V 21/28, G02B 6/00

(54) **Projektionsvorrichtung mit beweglichem Projektionskopf und Wellenlängenumwandlung**
Projection device with movable projection head and wavelength conversion
Dispositif de projection avec tête de projection mobile et conversion de longeur d'onde

(30) Priorität: 24.08.2010 DE 102010039683
(43) Veröffentlichungstag der Anmeldung: 14.11.2012
(73) Patentinhaber: OSRAM GmbH, 80807 München (DE)
(72) Erfinder: MORGENBROD, Nico, 10585 Berlin (DE); REHN, Henning, 13407 Berlin (DE)
(86) Internationale Anmeldenummer: PCT/EP2011/063242
(87) Internationale Veröffentlichungsnummer: WO 2012/025339

(56) Entgegenhaltungen:
- EP-A2- 1 887 404
- DE-A1- 3 046 663
- US-A- 5 710 663
- US-A1- 2001 046 035
- US-A1- 2008 079 910
- US-A1- 2009 034 284
- US-B1- 6 212 213

## Beschreibung

Die Erfindung betrifft eine Projektionsvorrichtung, aufweisend eine Basis, einen Träger und einen Projektionskopf, wobei die Projektionsvorrichtung einen wellenlängenumwandelnden Leuchtstoff zur Umwandlung eines von einer Lichtquelle erzeugten Lichtstrahls aufweist.

Es sind Projektionsvorrichtung oder Beamer der oben beschriebenen Art mit einem kompakten Gehäuse bekannt, bei denen eine Lichterzeugungseinheit mittels des Leuchtmittels ein Mischlicht erzeugt. Das Mischlicht wird über eine frontal angeordnete Projektionsoptik als ein definiertes Lichtbündel abgestrahlt. Das frontal abgestrahlte Lichtbündel kann mittels einer Einstellung von Standbeinen zumindest grob ausgerichtet werden.

Aus der US 2001/ 046 035 A1 ist ein Projektor mit einer Lichtquelle in einer Basis und einem dazu verdrehbar angeordneten Projektionskopf mit einer in dessen Träger untergebrachten Lichtführung bekannt. Die Druckschriften DE 10 2007 05 480 B3 und DE 10 2007 037 875 A1 offenbaren Beleuchtungseinrichtungen, in denen ein Primärlichtstrahl durch einen Spiegel auf einen Leuchtstoff umgeleitet wird, wobei das dabei im Leuchtstoff entstehende wellenlängenumgewandelte Licht abgestrahlt wird.

Es ist die Aufgabe der vorliegenden Erfindung, die Nachteile des Standes der Technik zumindest teilweise auszuräumen und insbesondere eine einfach ausgestaltbare und ausrichtbare Projektionsvorrichtung bereitzustellen.

Diese Aufgabe wird gemäß den Merkmalen des unabhängigen Anspruchs gelöst. Bevorzugte Ausführungsformen sind insbesondere den abhängigen Ansprüchen entnehmbar.

Die Aufgabe wird gelöst durch eine Projektionsvorrichtung, aufweisend eine Basis, einen Träger und einen Projektionskopf, wobei der Träger sowohl gegen die Basis als auch gegen den Projektionskopf verdrehbar ist, wobei in dem Träger eine Lichtführung untergebracht ist und in dem Projektionskopf mindestens ein wellenlängenumwandelnder Leuchtstoff zur Umwandlung zumindest eines Teils eines von der mindestens einen Lichtquelle erzeugten Lichtstrahls untergebracht ist.

Die Basis kann insbesondere der Befestigung und/oder Anordnung der Projektionsvorrichtung und kann beispielsweise als ein (Stand-)Fuß zum Aufsatz auf eine Unterlage, als eine Wandhalterung, als eine Deckenhaltung usw. ausgestaltet sein.

Der Träger kann insbesondere als ein Arm oder Schwenkarm ausgestaltet sein.

Durch den Projektionskopf kann von der Projektionsvorrichtung erzeugtes Licht gerichtet nach Außen abgestrahlt werden.

In der Projektionsvorrichtung besteht somit zumindest ein optischer Pfad, welcher durch die Lichtführung des Trägers zu mindestens einem Leuchtstoff in dem Projektionskopf und weiter nach Außen bzw. zu einer Lichtaustrittsöffnung in dem Projektionskopf führt. Innerhalb der Projektionsvorrichtung können noch weitere optische Pfade vorhanden sein. Licht kann somit zumindest in dem Träger und weiter von dem Träger in den Projektionskopf geleitet werden.

Der optische Pfad beginnt in der Basis, da das Licht in der Basis erzeugt wird. Alternativ kann eine Lichteinkopplung direkt in den Träger erfolgen, z.B. von einer externen Primärlicht-Erzeugungseinheit. Der Träger kann dazu insbesondere eine von Außen zugängliche Lichtschnittstelle aufweisen.

Während aus dem Träger in den Projektionskopf nur das von der mindestens einen Lichtquelle abgestrahlte (ursprüngliche) Licht eintritt, kann aufgrund der durch den Leuchtstoff bewirkten Wellenlängenumwandlung aus dem Projektionskopf rein wellenlängenumgewandeltes Licht oder aus dem ursprünglichen Licht und aus wellenlängenumgewandeltem Licht zusammengesetztes Mischlicht austreten. So kann ein Mischlicht mit einem gut definierten Summenfarbort erzeugt werden, z.B. Weißlicht.

Diese Projektionsvorrichtung weist den Vorteil auf, dass eine Lichtführung zu dem Projektionskopf einfach und preiswert ausgestaltbar ist, da im einfachsten Fall nur ein monochromer Lichtstrahl zu führen ist. Auch ist eine Ausrichtung des Projektionskopfs aufgrund der beidseitig drehbaren Befestigung des Trägers in einen weiten Raumbereich einfach möglich.

Bevorzugterweise umfasst die mindestens eine Lichtquelle mindestens eine Leuchtdiode. Das von der mindestens einen Lichtquelle abgestrahlte Licht kann ein sichtbares Licht, infrarotes Licht (IR-LED) oder ein ultraviolettes Licht (UV-LED) sein. Die mindestens eine Leuchtdiode kann in Form mindestens einer einzeln gehäusten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AlInGaP, sind allgemein auch organische LEDs (OLEDs, z.B. Polymer-OLEDs) einsetzbar. Alternativ kann die mindestens eine Lichtquelle z.B. mindestens einen Diodenlaser oder anderen Laser aufweisen. Der Laser ist vorzugsweise ein Halbleiterlaser.

Erfindungsgemäß ist in der Basis mindestens eine Lichtquelle und/oder eine Ansteuereinrichtung (z.B. ein Treiber für die mindestens eine Lichtquelle) untergebracht . Die Lichtquelle und die Ansteuereinrichtung können in einer Primärlicht-Erzeugungseinheit zusammengefasst sein, welche dann in der Basis untergebracht ist. Dadurch wird eine besonders kompakte Projektionsvorrichtung bereitgestellt, welche insbesondere unabhängig bzw. im Stand-Alone-Betrieb betreibbar ist.

Alternativ können die mindestens eine Lichtquelle und/oder die Ansteuereinrichtung (z.B. zusammengefasst zu einer Primärlicht-Erzeugungseinheit) entfernt von der Basis angeordnet sein und z.B. durch einen Lichtleiter, insbesondere Lichtwellenleiter, mit der Projektionsvorrichtung, insbesondere mit der Basis, verbunden sein. Dies mag beispielsweise bei Operationsleuchten für medizinische Anwendungen vorteilhaft sein, da so eine durch den Betrieb der Lichtquelle und/oder der Ansteuereinrichtung erzeugte Störstrahlung durch eine entfernte Anordnung der Primärlicht-Erzeugungseinheit außerhalb eines Operationssaals herausgehalten werden kann. Auch mag die Primärlicht-Erzeugungseinheit bei Automobilanwendungen z.B. in einem Kofferraum oder Motorraum entfernt von einem Fahrzeugscheinwerfer o.ä. angeordnet sein.

Die Primärlicht-Erzeugungseinheit kann auch für einen Anschluss an mehrere Projektionsvorrichtungen vorgesehen und eingerichtet sein.

Es ist noch eine Ausgestaltung, dass der Träger gegenüber der Basis in einer ersten Ebene verdrehbar ist und gegenüber dem Projektionskopf in einer dazu senkrechten Ebene verdrehbar ist. Dadurch kann der Projektionskopf in jeden beliebigen Raumwinkel gerichtet werden. Die Verdrehbarkeit kann beispielsweise durch eine Verwendung eines jeweiligen offenen Drehgelenks erreicht werden.

Es ist noch eine Ausgestaltung, dass die Lichtführung in dem Träger mindestens einen Spiegel aufweist.

Es ist eine Weiterbildung, dass die Lichtführung in dem Träger mindestens ein strahlformendes optisches Element aufweist, insbesondere mindestens eine Linse.

Es ist ferner eine Ausgestaltung, dass die Lichtführung in dem Träger mindestens einen Lichtwellenleiter aufweist. Insbesondere kann die Lichtführung in dem Träger genau einen Lichtwellenleiter aufweisen, welcher zwischen einer optischen Schnittstelle oder Übergang, beispielsweise zu der Basis, und einer optischen Schnittstelle oder Übergang zu dem Projektionskopf verläuft. Dadurch wird eine besonders einfach implementierbare und robuste Art der Lichtführung ermöglicht.

Es ist noch eine weitere Ausgestaltung, dass der Projektionskopf mindestens einen dichroitischen Spiegel aufweist, welcher zumindest einen Teil des von dem Träger in den Projektionskopf einfallenden Lichts auf den mindestens einen wellenlängenumwandelnden Leuchtstoff richtet, wobei der mindestens eine dichroitische Spiegel für das mittels des Leuchtstoffs wellenlängenumgewandelten Lichts durchlässig ist.

So kann auf eine einfache Weise zumindest ein Teil des ursprünglichen Lichts auf den Leuchtstoff gerichtet werden und das wellenlängenumgewandelte Licht mit nur geringen Verlusten wieder abgestrahlt oder ausgekoppelt werden.

Erfindungsgemäß weist der Projektionskopf mindestens einen Mikrospiegel auf, welcher zumindest einen Teil des von dem Träger in den Projektionskopf einfallenden Lichts auf den mindestens einen wellenlängenumwandelnden Leuchtstoff richtet, wobei sich der Mikrospiegel in einem von dem zugehörigen Leuchtstoff zurückgestrahlten, wellenlängenumgewandelten Lichtstrahl befindet. Diese Anordnung ergibt den Vorteil, dass ein Lichtverlust sehr gering ist. Ein für eine Wellenlängenumwandlung durch den bestimmten Leuchtstoff vorgesehener Anteil des ursprünglichen Lichts kann somit (stark) auf den Mikrospiegel fokussiert werden, z.B. mittels einer entsprechenden vorgeschalteten Linse. Der Mikrospiegel kann den auf ihn einfallenden Lichtstrahl insbesondere aufweiten und auf den Leuchtstoff lenken. Der Leuchtstoff absorbiert das ursprüngliche Licht und emittiert zumindest teilweise ein wellenlängenumgewandeltes Licht. Das wellenlängenumgewandelte Licht wird zu einem Lichtstrahl gebündelt, welcher einen erheblich größeren Strahlquerschnitt aufweist als eine in Strahlrichtung projizierte Fläche des Mikrospiegels. Der Strahlquerschnitt des wellenlängenumgewandelten Lichtstrahls zumindest am Ort des Mikrospiegels kann mindestens 5-mal, insbesondere mindestens 10-mal, insbesondere mindestens 20-mal, größer sein als die in Strahlrichtung projizierte Fläche des Mikrospiegels.

Es ist eine Weiterbildung, dass ein vorbestimmter Anteil des in den Projektionskopf eingestrahlten (ursprünglichen) Lichts nicht auf den mindestens einen Leuchtstoff gerichtet wird, sondern direkt bzw. nicht umgewandelt aus dem Projektionskopf bzw. aus dessen Lichtaustrittsöffnung abgestrahlt wird. Dadurch kann ein Farbanteil des aus dem Projektionskopf abgestrahlten ursprünglichen Lichts mit einer hohen Genauigkeit eingestellt werden, und folglich ein Summenfarbort des aus dem ursprünglichen Licht und wellenlängenumgewandelten Licht erzeugten Mischlichts. Beispielsweise kann die Lichtquelle blaues Licht ausstrahlen und der Leuchtstoff blaues Licht in gelbes Licht umwandeln, so dass von dem Projektionskopf ein aus einem blauen und einem gelben Farbanteil zusammengesetztes weißes Mischlicht abgestrahlt wird.

Es ist außerdem eine Ausgestaltung, dass in dem Projektionskopf mehrere wellenlängenumwandelnde Leuchtstoffe untergebracht sind, welche einfallendes Licht in ein Licht einer jeweils unterschiedlichen Wellenlänge umwandeln. Dadurch kann ein besonders großer Farbraum ("Gamut") aufgespannt werden.

Beispielsweise kann ein ursprünglicher blauer Lichtstrahl teilweise unverändert bleiben, teilweise durch einen blau/rot-konvertierenden Leuchtstoff in rotes Licht umgewandelt werden (z.B. mittels eines blaues Licht umlenkenden und rotes Licht durchlassenden dichroitischen Spiegels sowie eines geeignet angeordneten Mikrospiegels) und teilweise durch einen blau/grün-konvertierenden Leuchtstoff in grünes Licht umgewandelt werden (z.B. mittels eines blaues Licht umlenkenden und grünes Licht durchlassenden dichroitischen Spiegels sowie eines geeignet angeordneten Mikrospiegels). So lässt sich ein Mischlicht innerhalb des RGB-Farbraums erzeugen.

Es ist ferner eine Ausgestaltung, dass in dem Projektionskopf mehrere wellenlängenumwandelnde Leuchtstoffe untergebracht sind und nur wellenlängenumwandeltes Licht aus dem Projektionskopf abstrahlbar ist. Dadurch kann beispielsweise auch eine UV-Lichtquelle eingesetzt werden. Das von der UV-Lichtquelle ausgesandte UV-Licht kann z.B. mittels geeigneter Leuchtstoffe in sichtbares Licht umgewandelt werden, z.B. in blaues und gelbes Licht oder in rotes, blaues und grünes Licht.

Es ist noch eine Ausgestaltung, dass vor mindestens einem Leuchtstoff ein Lichtleitstab angeordnet ist. Der Lichtleitstab kann als ein Kollimator zur Erzeugung eines im Wesentlichen parallelen Strahlenverlaufs entlang seiner Längsachse dienen, so dass von dem Leuchtstoff oder Leuchtstoffvolumen zunächst ungerichtet abgestrahltes Licht ausgerichtet wird. Dadurch kann Licht aus dem Projektionskopf in einem gut definierten Strahlenbündel abgestrahlt werden. Der Lichtleitstab kann auch als ein Lichtmischstab dienen.

Der Lichtleitstab kann beispielsweise zwischen einem dichroitischen Spiegel und einem Mikrospiegel einerseits und dem davon angestrahlten Leuchtstoff andererseits angeordnet sein.

Es ist auch eine weitere Ausgestaltung, dass der mindestens eine Leuchtstoff an einer Endfläche des Lichtleitstabs angebracht ist. Dadurch kann eine besonders effektive Lichteinkopplung von dem Leuchtstoff in den Lichtleitstab erreicht werden. Auch ergibt sich ein einfacher Aufbau. An der anderen Deckfläche oder Endfläche des Lichtleitstabs können das ursprüngliche Licht eingestrahlt und das wellenlängenumgewandelte Licht abgestrahlt werden.

Es ist eine Weiterbildung, dass die Leuchtstoffe auf einer rotierenden Scheibe angeordnet sind. So kann das Mischlicht durch eine Drehung der Scheibe mit einer vorgegebenen Drehzahl und je nach Farbanteil auch unterschiedlich langen, mit unterschiedlichen Leuchtstoffen belegten Sektoren erzeugt werden. Es ist noch eine Weiterbildung, dass die Leuchtstoffe auf einem linear beweglichen Streifen ö.ä. angeordnet sind. So kann das Mischlicht durch eine Verschiebung des Streifens mit einer vorgegebenen Taktzahl und je nach Farbanteil auch unterschiedlich langen, mit unterschiedlichen Leuchtstoffen belegten Sektoren erzeugt werden. Das ursprüngliche Licht kann von der Scheibe oder von dem Streifen zurückgestrahlt werden (reflektierender Betrieb) oder durch die Scheibe oder den Streifen hindurchgestrahlt werden (transmittierender Betrieb). Ein Farbanteil des ursprünglichen Lichts kann z.B. in dem reflektierenden Betrieb durch einen spiegelnden Sektor und in dem transmittierenden Betrieb durch einen transparenten Sektor beigemischt werden.

Die Projektionsvorrichtung kann beispielsweise eine Leuchte für eine Raumbeleuchtung sein. Die Projektionsvorrichtung kann ferner als ein Beamer ausgestaltet sein. Die Projektionsvorrichtung kann darüber hinaus für einen Einsatz in dem sog. Entertainmentbereich vorgesehen sein, z.B. als ein kopfbewegter Scheinwerfer ("Moving Head"). Die Projektionsvorrichtung kann ferner als ein Automobilscheinwerfer verwendet werden, insbesondere für oder als ein AFL ("Adaptive Forward Lighting)-System / AFS ("Adaptive Forwardlighting System"). Die Projektionsvorrichtung kann ferner auch als eine Operationsleuchte Anwendung finden. Jedoch ist die Erfindung nicht auf die genannten Anwendungen und Anwendungsgebiete beschränkt.

Allgemein, insbesondere jedoch auch bei einer Anwendung als kopfbewegter Scheinwerfer oder Automobilscheinwerfer, kann die Projektionsvorrichtung motorisch verstellbar sein. Insbesondere können dazu die Gelenke zwischen der Basis und dem Träger und/oder zwischen dem Träger und dem Projektionskopf mit entsprechenden Stellmotoren gekoppelt sein. Der Träger selbst kann mehrteilig mit entsprechenden, insbesondere motorisch bewegbaren, Gelenken zwischen den Teilen ausgebildet sein.

Das Ausgeben zumindest des wellenlängenumgewandelten Lichts aus dem Projektionskopf kann ein Ausgeben nur des wellenlängenumgewandelten Lichts umfassen, z.B. falls das eingestrahlte Licht UV-Licht ist. Das aus dem Projektionskopf ausgegebene oder abgestrahlte Licht kann insbesondere ein Mischlicht sein.

Das Ausgeben zumindest des wellenlängenumgewandelten Lichts aus dem Projektionskopf kann ein Ausgeben von wellenlängenumgewandeltem Licht und eines nicht auf einen Leuchtstoff gerichteten Lichtanteils umfassen, z.B. falls das eingestrahlte Licht blaues Licht ist. Das aus dem Projektionskopf ausgegebene Licht kann insbesondere ein Mischlicht sein.

Das Ausgeben zumindest des wellenlängenumgewandelten Lichts kann ein Ausgeben von Licht einer Wellenlänge (entsprechend z.B. einer Umwandlung an einem Leuchtstoff) oder Licht mehrerer Wellenlängen (entsprechend z.B. einer Umwandlung an mehreren Leuchtstoffen) umfassen.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugszeichen versehen sein.
- Fig.1: zeigt eine Aufbauskizze einer Projektionsvorrichtung gemäß einer ersten nicht erfindungsgemässen Ausführungsform; und
- Fig.2: zeigt Teile einer Projektionsvorrichtung gemäß einer Ausführungsform der Erfindung.

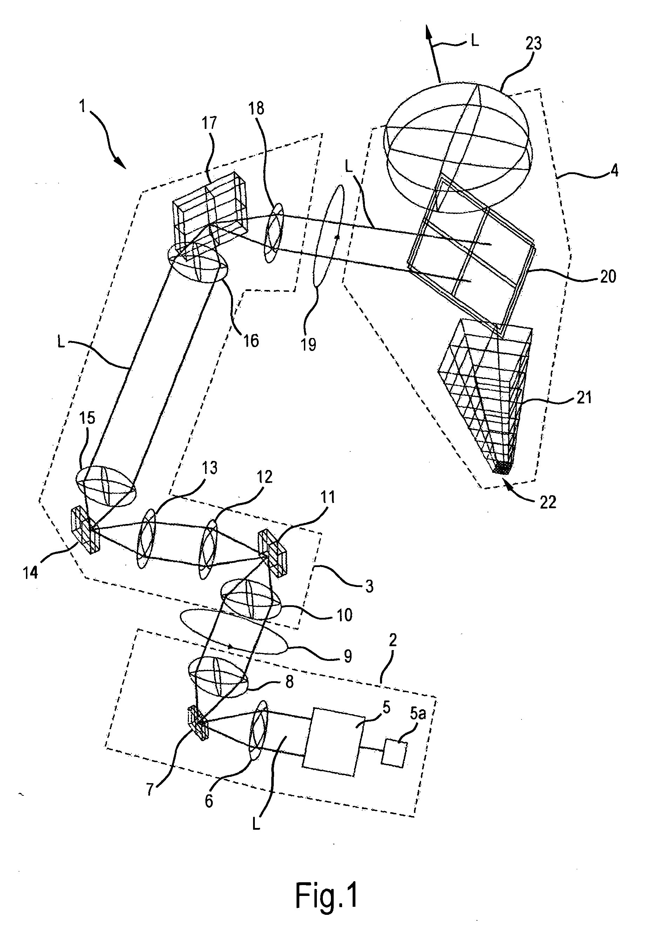

**Fig.1** skizziert einen Aufbau einer Projektionsvorrichtung 1 mit einer Basis in Form eines (Stand-)Fußes 2, einem Träger 3 und einem Projektionskopf 4. Der Fuß 2 trägt den Träger 3 und den Projektionskopf 4. Die Projektionsvorrichtung 1 wird somit mittels des Fußes 2 abgestellt. In dem Fuß 2 befindet sich eine Lichtquelle in Form eines Lasers 5, beispielsweise eines Halbleiterlasers. Der Laser 5 wird von einer Ansteuerung 5a gesteuert, welche zusammen eine Primärlicht-Erzeugungseinheit 5, 5a bilden. Die Primärlicht-Erzeugungseinheit kann eine vorgefertigte Einheit sein. Das von dem Laser 5 ausgestrahlte Licht L wird in dem Fuß 2 mittels einer Linse 6 auf einen Umlenkspiegel 7 fokussiert. Der Umlenkspiegel 7 richtet das auf ihn einfallende Licht L auf eine weitere Linse 8 des Fußes 2, welcher den Lichtstrahl zum Austritt aus dem Fuß 2 und zum Eintritt in den Träger 3 geeignet formt.

Der Fuß 2 und der Träger 3 sind über ein Drehgelenk 9 miteinander in einer ersten Drehebene (beispielsweise einer x-y-Ebene) drehbar verbunden. Das Drehgelenk 9 ist offen ausgestaltet, so dass ein Lichtstrahl von dem Fuß 2 in den Träger 3 durch das Drehgelenk 9 hindurch laufen kann.

In dem Träger 3 wird der durch das Drehgelenk 9 eintretende oder einfallende Lichtstrahl zunächst mittels einer Linse 10 auf einen ersten Umlenkspiegel 11 des Trägers 3 und von dort aus weiter durch eine Linse 12 und eine Linse 13 auf einen zweiten Umlenkspiegel 14 gelenkt. Der zweite Umlenkspiegel 14 wiederum richtet das auf ihn einfallende Licht durch zwei Linsen 15 und 16 auf einen dritten Umlenkspiegel 17, wobei der Umlenkspiegel 17 das Licht L durch eine weitere Linse 18 aus dem Träger 3 ausstrahlt.

Genauer gesagt strahlt das Licht L aus dem Träger 3 durch ein weiteres Drehgelenk 19 in den Projektionskopf 4. Das Drehgelenk 19 ist wieder als ein offenes Drehgelenk ausgestaltet, so dass der Lichtstrahl von dem Träger 3 durch das Drehgelenk 19 in den Projektionskopf 4 laufen kann. Eine (zweite) Drehebene des Drehgelenks 19 (z.B. eine z-Ebene) steht im Wesentlichen senkrecht zu der (ersten) Drehebene des Drehgelenks 9. In anderen Worten liegen auch die Drehachsen der beiden Drehgelenke 9, 19 zueinander senkrecht. Dadurch kann der Projektionskopf 4 im Wesentlichen in alle Raumrichtungen ausgerichtet werden.

Das in den Projektionskopf 4 aus dem Träger 3 eintretende (ursprüngliche) Licht L trifft zumindest teilweise auf einen dichroitischen Spiegel 20 und wird von diesem durch einen Lichtleitstab 21, welcher beispielsweise aus Plexiglas bestehen kann, auf einen Leuchtstoff 22 bzw. auf ein Leuchtstoffvolumen gelenkt. Der Leuchtstoff 22 kann insbesondere an der unteren Deckfläche oder Endfläche des Lichtleitstabs 21 angebracht sein, wodurch sich eine besonders effektive Lichteinkopplung und Lichtauskopplung ergibt.

Das auf den Leuchtstoff 22 einfallende ursprüngliche Licht wird zumindest teilweise absorbiert und als Licht unterschiedlicher Wellenlänge re-emittiert. Das re-emittierte, wellenlängenumgewandelte Licht wird mittels des Lichtleichtstabs 21 kollimiert und auf den dichroitischen Spiegel 20 gestrahlt. Der Lichtleitstab 21 dient somit einerseits zur Strahlformung als auch als ein Kollimator.

Das auf den dichroitischen Spiegel 20 einfallende wellenlängenumgewandelte Licht wird hindurch gelassen und mittels einer in der Lichtaustrittsöffnung befindlichen Austrittsoptik 23, welche beispielsweise ein fokussierendes Linsensystem umfassen kann, aus dem Projektionskopf 4 ausgegeben.

Der Projektionskopf 4 kann insbesondere so ausgestaltet sein, dass er mehrere Leuchtstoffe oder Leuchtstoffvolumina aufweist, welche das ursprüngliche Licht oder bereits wellenlängenumgewandeltes Licht wellenlängenumwandeln können. Jedem dieser unterschiedlichen Leuchtstoffe kann ein Lichtleitstab zugeordnet sein. Beispielsweise kann der Laser 5 ein UV-Laser sein, dessen Licht auf drei unterschiedliche Leuchtstoffe in dem Projektionskopf gerichtet wird, wo das UV-Licht in rotes, grünes bzw. blaues Licht umgewandelt wird. In diesem Fall sind die zugehörigen dichroitischen Spiegel für das UV-Licht nicht durchlässig, sondern nur für das von den jeweiligen Leuchtstoffen re-emittierte sichtbare Licht.

Alternativ kann das von dem Laser 5 erzeugte Licht sichtbares Licht sein, z.B. blaues Licht. Dieses ursprüngliche Licht kann in dem Projektionskopf zumindest teilweise in ein Licht anderer Längenwelle umgewandelt werden. Dabei kann insbesondere ein Teil des ursprünglich aus dem Träger 3 in den Projektionskopf 4 eingestrahlten Lichts auf die Austrittsoptik 23 aufgegeben werden, ohne zuvor auf einen Leuchtstoff gerichtet worden zu sein. Dadurch tritt aus der Austrittsoptik 23 ein Mischlicht aus, welches aus wellenlängenumgewandeltem Licht und aus dem ausgekoppelten ursprünglichen Licht besteht.

Der Leuchtstoff 22 (bzw. mehrere Leuchtstoffe) können gekühlt sein, und zwar aktiv (beispielsweise mittels eines Lüfters oder einer Heatpipe) oder passiv (beispielsweise durch einen Anschluss an einen Kühlkörper). Durch die Kühlung wird eine Aufwärmung des Leuchtstoffs 22 aufgrund von durch die Wellenlängenumwandlung erzeugten Stokes-Verlusten begrenzt, so dass auch eine durch diese Erwärmung bewirkte Wellenlängenverschiebung begrenzt werden kann.

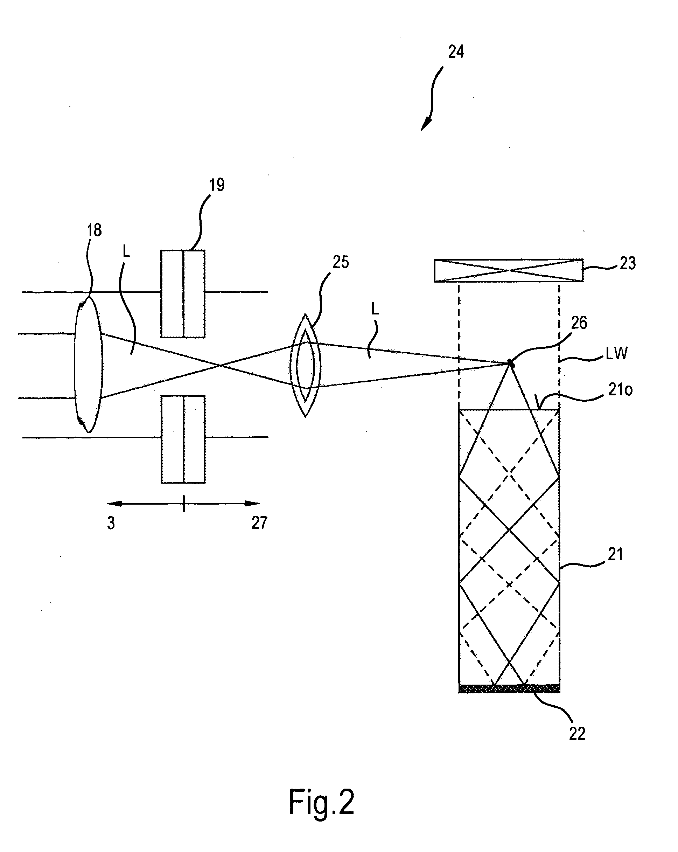

Fig.2 zeigt als Schnittdarstellung in Seitenansicht Teile einer Projektionsvorrichtung 24 gemäß einer Ausführungsform der Erfindung. Diese Projektionsvorrichtung 24 weist in ihrem Projektionskopf 27 anstelle des dichroitischen Spiegels 20 einen Mikrospiegel 26 auf, dem aus Richtung des Trägers 3 eine stark brechende Linse 25 innerhalb des Projektionskopfs 27 vorgeschaltet ist. Der Mikrospiegel 26 weist eine sehr geringe Fläche auf und lenkt das durch die Linse 25 stark auf ihn fokussierte ursprüngliche Licht L durch den Lichtleitstab 21 auf den Leuchtstoff 22.

Das von den Leuchtstoff 22 erzeugte wellenlängenumgewandelte Licht ist durch den Lichtleitstab 21 kollimiert worden und tritt im Wesentlichen aus der gesamten Breite der oberen Endfläche 21o aus. Der Stahldurchmesser des wellenlängenumgewandelten Lichtstrahls Lw ist erheblich größer als eine in seiner Strahlrichtung projizierte Fläche des Mikrospiegels 26. Der Mikrospiegel 26 schattet somit den wellenlängenumgewandelten Lichtstrahl Lw nicht merklich ab. Der wellenlängenumgewandelte Lichtstrahl Lw kann dadurch im Wesentlichen ungedämpft durch die Abschlussoptik 23 laufen.

Auch hier kann ein Teil des ursprünglichen Lichtstrahls L vorher ausgekoppelt werden, insbesondere vor Eintritt in die stark brechende Linse 25, um ebenfalls durch die Abschlussoptik 23 laufen zu können und so ein entsprechendes Mischlicht erzeugen zu können. Jedoch ist es beispielsweise auch möglich, eine Dichte und/eine Dicke des Leuchtstoffs 22 so einzustellen, dass der Leuchtstoff 22 nur einen definierten Anteil des auf ihn auftreffenden ursprünglichen Lichtstrahls L wellenlängenumwandelt und folglich aus der oberen Endfläche 21o des Lichtleitstabs 21 bereits ein Mischlicht austritt welches einen definierten Anteil des ursprünglichen Lichts und des wellenlängenumgewandelten Lichts aufweist. Der Leuchtstoff 22 kann insbesondere in dieser Weiterbildung ein blau/gelb konvertierender Leuchtstoff sein, während der ursprüngliche Lichtstrahl ein blauer Lichtstrahl ist. Das sich ergebende blau/gelbe Mischlicht kann dann insbesondere weißes Licht sein.

Selbstverständlich ist die vorliegende Erfindung nicht auf die gezeigten Ausführungsbeispiele beschränkt.

So kann an dem Ende des Lichtleitstabs oder mehrerer Lichtleitstäbe auch ein linear oder rotativ bewegter Leuchtstoffträger zum aktiven Ändern des aktuell bestrahlten Leuchtstoffs und damit zum Ändern eines Summenfarborts des aus dem Projektorkopf 4 abgestrahlten Lichts aufweisen. Auch kann anstelle des Lichtleitstabs (Kollimators/Lichtmischstabs) auch eine Linse hoher Brechkraft verwendet werden.

Ganz allgemein kann die Strahlführung anstelle von singulären optischen Elementen wie Linsen und Spiegeln zumindest teilweise auch mindestens einen Lichtleitkörper, wie beispielsweise einen Lichtwellenleiter, aufweisen bzw. verwenden.

Selbstverständlich ist die vorliegende Erfindung nicht auf die gezeigten Ausführungsbeispiele beschränkt.

### Bezugszeichenliste

- 1: Projektionsvorrichtung
- 2: Fuß
- 3: Träger
- 4: Projektionskopf
- 5: Laser
- 5a: Ansteuerung
- 6: Linse
- 7: Umlenkspiegel
- 8: Linse
- 9: Drehgelenk
- 10: Linse
- 11: Umlenkspiegel
- 12: Linse
- 13: Linse
- 14: Umlenkspiegel
- 15: Linse
- 16: Linse
- 17: Umlenkspiegel
- 18: Linse
- 19: Drehgelenk
- 20: dichroitischer Spiegel
- 21: Lichtleitstab
- 22: Leuchtstoff
- 23: Austrittsoptik
- 24: Projektionsvorrichtung
- 25: Linse
- 26: Mikrospiegel
- 27: Projektionskopf
- L: Licht
- Lw: wellenlängenumgewandelter Lichtstrahl

## Patentansprüche

1. Projektionsvorrichtung (1; 24), aufweisend eine Basis (2), wobei in der Basis (2) mindestens eine Primärlicht-Erzeugungseinheit (5, 5a) untergebracht ist, einen Träger (3) und einen Projektionskopf (4; 27), wobei der Träger (3) gegen die Basis (2) und gegen den Projektionskopf (4; 27) verdrehbar ist, wobei
- in dem Träger (3) eine Lichtführung (10-18) untergebracht ist und
- in dem Projektionskopf (4; 27) mindestens ein wellenlängenumwandelnder Leuchtstoff (22) zur Umwandlung zumindest eines Teils eines von der mindestens einen Lichtquelle (5) erzeugten Lichtstrahls (L) untergebracht ist
- der Projektionskopf (27) mindestens einen Mikrospiegel (26) aufweist, welcher zumindest einen Teil des von dem Träger (3) in den Projektionskopf (27) einfallenden Lichts (L) auf den mindestens einen wellenlängenumwandelnden Leuchtstoff (22) richtet, wobei sich der Mikrospiegel (26) in einem von dem zugehörigen Leuchtstoff (22) zurückgestrahlten, wellenlängenumgewandelten Lichtstrahl (Lw) befindet.

2. Projektionsvorrichtung (1; 24) nach einem der vorhergehenden Ansprüche, wobei der Träger (3) gegenüber der Basis (2) in einer ersten Ebene verdrehbar ist und gegenüber dem Projektionskopf (4) in einer dazu senkrechten Ebene verdrehbar ist.

3. Projektionsvorrichtung (1; 24) nach einem der vorhergehenden Ansprüche, wobei die Lichtführung (10-18) in dem Träger (3) mindestens einen Spiegel (11, 14, 17) aufweist.

4. Projektionsvorrichtung (1; 24) nach einem der vorhergehenden Ansprüche, wobei in dem Projektionskopf (4; 27) mehrere wellenlängenumwandelnde Leuchtstoffe untergebracht sind, welche einfallendes Licht in ein Licht einer jeweils unterschiedlichen Wellenlänge umwandeln.

5. Projektionsvorrichtung (1; 24) nach Anspruch 4, wobei in dem Projektionskopf (4; 27) mehrere wellenlängenumwandelnde Leuchtstoffe untergebracht sind und nur wellenlängenumwandeltes Licht aus dem Projektionskopf (4; 27) abstrahlbar ist.

6. Projektionsvorrichtung (1; 24) nach einem der vorhergehenden Ansprüche, wobei vor mindestens einem Leuchtstoff (22) ein Lichtleitstab (21) angeordnet ist.

7. Projektionsvorrichtung (1; 24) nach Anspruch 6, wobei der mindestens eine Leuchtstoff (22) an einer Endfläche des Lichtleitstabs (21) angebracht ist.

8. Projektionsvorrichtung (1; 24) nach einem der vorhergehenden Ansprüche, wobei die Leuchtstoffe auf einer rotierenden Scheibe oder auf einem linear beweglichen Streifen angeordnet sind.

9. Projektionsvorrichtung (1; 24) nach einem der vorhergehenden Ansprüche, wobei die Projektionsvorrichtung (1; 24) als eine Raumbeleuchtungseinheit, ein Beamer, ein kopfbewegter Scheinwerfer, ein Automobilscheinwerfer oder als eine Operationsleuchte ausgestaltet ist.

## Claims

1. Projection device (1; 24) having a base (2), a primary light producing unit (5, 5a) being accommodated in the base (2), a support (3) and a projection head (4; 27), the support (3) being rotatable relative to the base (2) and relative to the projection head (4; 27),
- the light-guiding means (10-18) being accommodated in the support (3), and
- at least one wavelength-converting phosphor (22) for converting at least part of a light beam (L) generated by the at least one light source (5) being accommodated in the projection head (4; 27), and
- the projection head (27) having at least one micromirror (26) which directs at least a portion of the light (L), incident in the projection head (27) from the support (3), onto the at least one wavelength-converting phosphor (22), the micro mirror (26) being located in a wavelength-converting light beam (Lw) retroreflected by the associated phosphor (22).

2. Projection device (1; 24) according to one of the preceding claims, the support (3) being rotatable relative to the base (2) in a first plane, and being rotatable relative to the projection head (4) in a plane perpendicular to it.

3. Projection device (1; 24) according to one of the preceding claims, the light-guiding means (10-18) in the support (3) having at least one mirror (11, 14, 17).

4. Projection device (1; 24) according to one of the preceding claims, there being accommodated in the projection head (4; 27) a plurality of wavelength-converting phosphors which convert incident light into a light of a respectively different wavelength.

5. Projection device (1; 24) according to Claim 4, a plurality of wavelength-converting phosphors being accommodated in the projection head (4; 27), and only wavelength-converted light being capable of being emitted from the projection head (4; 27).

6. Projection device (1; 24) according to one of the preceding claims, a light guide rod (21) being arranged upstream of at least one phosphor (22).

7. Projection device (1; 24) according to Claim 6, the at least one phosphor (22) being attached at an end face of the light guide rod (21).

8. Projection device (1; 24) according to one of the preceding claims, the phosphors being arranged on a rotating disc or on a linearly movable strip.

9. Projection device (1; 24) according to one of the preceding claims, the projection device (1; 24) being configured as a room lighting unit, a beamer, a head-moved spotlight, an automobile head lamp, or as an operating light.

## Revendications

1. Dispositif de projection (1; 24) présentant une base (2), au moins une unité génératrice de lumière primaire (5, 5a) étant logée dans la base (2), un support (3) et une tête de projection (4 ; 27), le support (3) pouvant être tourné contre la base (2) et contre la tête de projection (4 ; 27),
- un dispositif de guidage de lumière (10 - 18) étant logé dans le support (3) et
- au moins une substance luminescente (22) convertissant la longueur d'ondes étant logée dans la tête de projection (4 ; 27) pour convertir au moins une partie d'un rayon lumineux (L) généré par l'au moins une source de lumière (5)
- la tête de projection (27) présentant au moins un micro-miroir (26) lequel dirige au moins une partie de la lumière (L) incident du support (3) dans la tête de projection (27) sur l'au moins une substance luminescente (22) convertissant la longueur d'onde, le micro-miroir(26) se trouvant dans un rayon lumineux (Lw) converti en longueur d'onde, émis en retour par la substance luminescente correspondante (22).

2. Dispositif de projection (1 ; 24) selon la revendication précédente, le support (3) pouvant être tourné dans un premier plan par rapport à la base (2) et dans un plan perpendiculaire à celui-ci par rapport à la tête de projection (4).

3. Dispositif de projection (1 ; 24) selon l'une quelconque des revendications précédentes, le dispositif de guidage de lumière (10 - 18) logé dans le support (3) présentant au moins un miroir (11, 14, 17).

4. Dispositif de projection (1 ; 24) selon l'une quelconque des revendications précédentes, plusieurs substances luminescentes convertissant la longueur d'onde étant logées dans la tête de projection (4 ; 27), lesquelles convertissent la lumière incidente en une lumière d'une longueur d'onde respectivement différente.

5. Dispositif de projection (1 ; 24) selon la revendication 4, plusieurs substances luminescentes convertissant la longueur d'onde étant logées dans la tête de projection (4 ; 27) et seulement la lumière convertie en longueur d'onde pouvant être émise de la tête de projection (4 ; 27).

6. Dispositif de projection (1 ; 24) selon l'une quelconque des revendications précédentes, une tige de guidage de lumière (21) étant disposée devant au moins une substance luminescente (22).

7. Dispositif de projection (1 ; 24) selon la revendication 6, l'au moins une substance luminescente (22) étant placée sur une surface terminale de la tige de guidage de lumière (21).

8. Dispositif de projection (1 ; 24) selon l'une quelconque des revendications précédentes, les substances luminescentes étant disposées sur un disque rotatif ou sur une bande linéairement déplaçable.

9. Dispositif de projection (1 ; 24) selon l'une quelconque des revendications précédentes, le dispositif de projection (1 ; 24) étant réalisé comme une unité d'éclairage de pièce, un projecteur, un projecteur à tête mobile, un phare d'automobile ou comme une lampe d'opération.
